# EUROPEAN PATENT APPLICATION

(11) **EP 3 477 660 A1**
(43) Date of publication of application: **01.05.2019**
(21) Application number: 17198524.5
(22) Date of filing: 26.10.2017
(51) Int. Cl.: G21C 3/07

(54) **A CLADDING TUBE, AND A METHOD OF MANUFACTURING A CLADDING TUBE**

(71) Applicant: Westinghouse Electric Sweden AB, 721 63 Västerås (SE)
(72) Inventor: MIDDLEBURGH, Simon, 722 33 Västerås (SE); HALLSTADIUS, Lars, 725 92 Västerås (SE)
(74) Representative: Bjerkéns Patentbyrå KB (Stockholm)

(57) **Abstract**

A cladding tube (11) for a fuel rod to be used in a nuclear fission reactor, and a method of manufacturing the cladding tube are disclosed. The cladding tube encloses fissile nuclear fuel (10) and comprises a tubular base layer (20) of a zirconium based alloy, and a coating layer (21). The coating layer is applied onto an outer border (20a) of the tubular base layer. The coating layer is formed of an amorphous alloy comprising zirconium and a further element.

## Description

### TECHNICAL FIELD OF THE INVENTION

The present invention refers generally to a cladding tube suitable for use in nuclear fission reactors, for instance water cooled reactors, including light water reactors such as Boiling Water reactors BWR and Pressurized Water reactors PWR. The cladding tube is also suitable for use in the next generation reactors, both fast reactors such as lead-fast reactors, and thermal reactors, such as small modular reactors.

Specifically, the present invention refers to a cladding tube for a nuclear fission reactor according to the preamble of claim 1.

Furthermore, the present invention refers to a method of manufacturing a cladding tube for a nuclear fission reactor and for enclosing fissile nuclear fuel according to the preamble of claim 12.

### BACKGROUND AND PRIOR ART

EP-154559 discloses a cladding tube for a nuclear fission reactor. The cladding tube is configured to enclose fissile nuclear fuel. The cladding tube comprises a tubular base layer of a zirconium based alloy.

Known problems of such cladding tubes of zirconium based alloys involve hydrogen pickup, shadow corrosion and mechanical wear or fretting. There are different solutions in the prior art to overcome these problems. EP-154559 suggests application of a coating onto an outer surface of the tubular base layer.

From the English Abstract of CN 103060726, it is known to use an amorphous alloy as a fuel cladding material. The amorphous alloy consists of Zr, Cu, Fe and Al. In particular, the amorphous alloy is Zr_{61.5}Cu_{21.5}Fe₅Al₁₂.

### SUMMARY OF THE INVENTION

The object of the present invention is to provide a cladding tube having an improved protective coating which contributes to overcome the above-mentioned problems.

The object is achieved by the fuel cladding tube initially defined, which is characterized in that
the coating layer is formed of an amorphous alloy comprising zirconium and a further element.

The coating layer of the amorphous alloy may form a hard, scratch resistant surface and may be chemically distinct from zirconium metals. The amorphous alloy is non-crystalline and may form a so called bulk metallic glass, BMG. BMGs have a hardness often in excess of 500Hv, which is much harder than common zirconium based alloys, such as Zircaloy-4.

It may thus be expected that fretting of the cladding tube according to the invention, as well as failure due to shadow corrosion may be limited or prevented, in particular in the areas in contact with the spacers of the fuel assembly.

The radiation of the nuclear fission reactor may aid to maintain the amorphous state of the coating layer.

Thanks to the tubular base layer of a zirconium based alloy, the advantages of zirconium in a nuclear fission reactor are maintained, such as the low neutron absorption cross-section and the high ductility. The coating layer is thinner, or significantly thinner, than the tubular base layer.

According to an embodiment of the invention, the further element comprises one of V, Cu, Cr, Si and Mg. These further elements may all form an amorphous alloy, and a bulk metallic glass, together with zirconium.

According to an embodiment of the invention, the amorphous alloy may consist of at least one of VZr, V₂Zr, CuZr, Cu₆₆Zr₃₄, CrZr, Cr₂Zr, SiZr and MgZr. These alloys are amorphous and may form a bulk metallic glass having a very hard and scratch resistant outer surface.

These amorphous alloys, for instance VZr, V₂Zr, Cu₆₆Zr₃₄, etc., may remain in the amorphous state up to a temperature exceeding 450°C. In the event of a rapid heat rise, beyond this temperature, the alloy would have no detrimental effects on the integrity of the cladding tube, but would simply crystallise to form a standard metal coating.

According to an embodiment of the invention, the amorphous alloy is a binary alloy, or predominantly binary alloy, comprising zirconium and the further element and possible residual alloying elements. Thus the amorphous alloy comprises two principal elements, namely zirconium and the further element, and possible residual alloying elements. The concentration of the residual alloying elements may be less than 5 molar percent.

According to an embodiment of the invention, the residual alloying elements comprise at least one of the elements Sn, Fe, Cr, Ni, Nb, C, O, V, Cu and Sb. The residual alloying elements may be incorporated from the zirconium based alloy of the tubular base layer.

According to an embodiment of the invention, the coating layer comprises an outwardly decreasing concentration of the residual alloying elements from the outer border of the tubular base layer. This outwardly decreasing concentration of the residual alloying elements, towards an outer surface of the coating layer, may create a gradual transition from the tubular base layer to the coating layer, which may contribute to a secure bonding of the coating layer to the zirconium based alloy of the tubular base layer.

According to an embodiment of the invention, the zirconium based alloy of the tubular base layer comprises an inwardly decreasing concentration of the further element from the outer border of the tubular base layer. Also this inwardly decreasing concentration of the further elements, towards an inner surface of the tubular base layer, may enhance the gradual transition between the tubular base layer and the coating layer, which may contribute a secure bonding of the coating layer to the zirconium based alloy of the tubular base layer.

According to an embodiment of the invention, the further element comprises one of Ti-Cu-Ni-AI, Cu-Ni-Nb and Mg-Ni. These further elements, or combinations of elements, may all form an amorphous alloy, and a bulk metallic glass, suitable as a coating of a cladding tube of a zirconium based alloy.

According to an embodiment of the invention, the amorphous alloy comprises a dopant comprising at least one of the elements O, N, C, P and S. The dopant in the form of one or more of these elements may be added in order to aid the stability of the amorphous state of the coating layer.

According to an embodiment of the invention, the concentration of the dopant in the amorphous alloy is less than 5000 ppm, preferably less than 2000 ppm or more preferably less than 500 ppm.

According to an embodiment of the invention, the coating layer has a thickness of 10-200 µm, preferably 15-100 µm, or more preferably 20-50 µm. The thickness may be measured from the outer border of the tubular base layer to the outer surface of the coating layer.

According to an embodiment of the invention, the cladding tube comprises an outer oxide surface layer formed on an outer surface of the coating layer. The outer oxide surface layer may be formed during use of the cladding tube in the nuclear fission reactor. Thus, no oxide surface layer may exist before the cladding tube is introduced into the nuclear fission reactor.

According to an embodiment of the invention, outer oxide surface layer comprises, or consists of, an oxide of the further element.

According to an embodiment of the invention, the coating layer is a plasma vapour deposited coating layer.

According to an embodiment of the invention, the coating layer is an electrodeposited coating layer.

The object is also achieved by the method initially, which is characterized in that the coating layer is formed of an amorphous alloy comprising zirconium and a further element.

According to an embodiment of the invention, the method comprises the step of: applying the coating layer by plasma vapour deposition.

According to an embodiment of the invention, the method comprises the step of: applying the coating layer by electrodeposition.

According to a further step of the method, an outer oxide surface layer is formed on an outer surface of the coating layer during use of the cladding tube in the nuclear fission reactor.

### BRIEF DESCRIPTION OF THE DRAWINGS

The invention is now to be explained more closed through a description of various embodiments and with reference to the drawings attached hereto.
- Fig 1: discloses schematically a longitudinal sectional view of a fuel assembly for a nuclear reactor.
- Fig 2: discloses schematically a longitudinal sectional view of a fuel rod of the fuel assembly in Fig 1.
- Fig 3: discloses schematically an enlarged longitudinal sectional view of a part of the fuel rod in Fig 2.

### DETAILED DESCRIPTION OF VARIOUS EMBODIMENTS

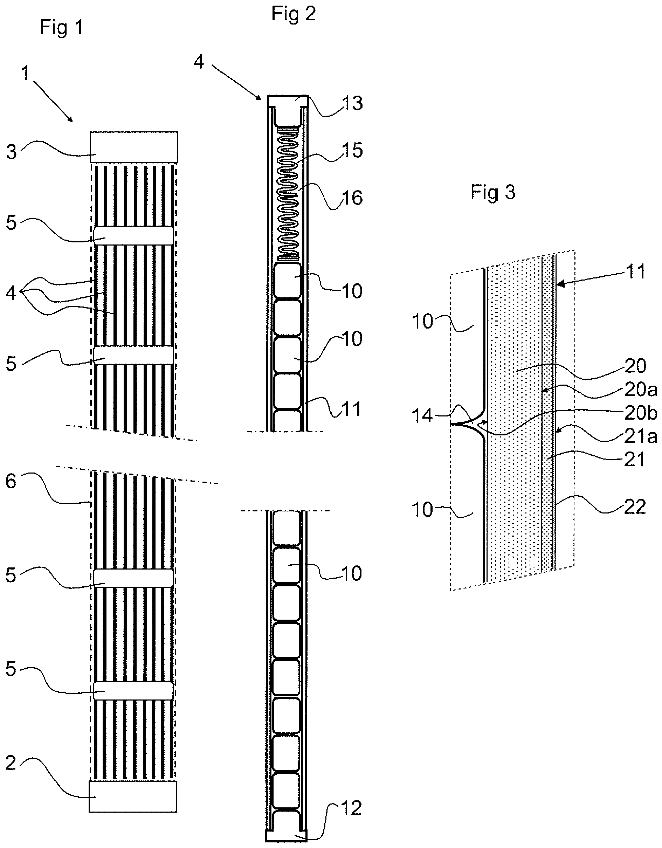

Fig. 1 discloses a fuel assembly 1 configured for being used in a nuclear fission reactor, in particular in a Light Water Reactor, LWR, such as a Boiling Water Reactor, BWR, or a Pressurized Water reactor, PWR.

The fuel assembly 1 comprises a bottom member 2, a top member 3 and a plurality of elongated fuel rods 4 extending between the bottom member 2 and the top member 3. The fuel rods 4 are maintained in their positions by means of a plurality of spacers 5.

Furthermore, the fuel assembly 1 may, for instance when to be used in a BWR, comprise a flow channel or fuel box 5 indicated by dashed lines 6 and surrounding the fuel rods 4.

Fig 2 discloses one of the fuel rods 4 of the fuel assembly 1 of Fig 1. The fuel rod 4 comprises a nuclear fuel, for instance in the form of a plurality of sintered nuclear fuel pellets 10, and a cladding tube 11 enclosing the nuclear fuel, in this case the nuclear fuel pellets 10. The fuel rod 4 comprises a bottom plug 12 sealing a lower end of the cladding tube 11, and a top plug 13 sealing an upper end of the cladding tube 11. The nuclear fuel pellets 10 are arranged in a pile in an inner space 14 of the cladding tube 11. The cladding tube 11 encloses the fuel pellets 10 and a gas in the inner space 14.

A spring 15 is arranged in an upper plenum 16 of the inner space 14 between the pile of nuclear fuel pellets 10 and the top plug 13. The spring 15 presses the pile of nuclear fuel pellets 10 against the bottom plug 12.

The cladding tube 11 comprises a tubular base layer 20 and a coating layer 21 applied onto an outer border 20a of the tubular base layer 20. The tubular base layer 20 is made of a zirconium based alloy, such as Zircaloy-2, Zircaloy-4, ZIRLO, Zr Sponge, ZrSn, E110, and M5.

The coating layer 21 adjoins the outer border 20a of the tubular base layer 20. The coating layer 21 is formed of an amorphous alloy comprising zirconium and a further element.

The amorphous alloy may be a binary amorphous alloy, or a predominantly binary amorphous alloy, consisting of the two principal elements, namely zirconium and the further element, and possible residual alloying elements.

According to a first embodiment of the invention, the further element comprises one of V, Cu, Cr, Si and Mg. For example, the amorphous alloy may comprise or consist of at least one of VZr, V₂Zr, CuZr, Cu₆₆Zr₃₄, CrZr, Cr₂Zr, SiZr and MgZr, and possible residual alloying elements.

These alloys are amorphous and may form a bulk metallic glass having a very hard and scratch resistant outer surface. The amorphous alloy may thus comprise a single one of the alloys exemplified above or a combination of two or more of the alloys exemplified above, for instance VZr-V₂Zr or CrZr-Cr₂Zr.

In particular, the binary amorphous alloy may be equiatomic, such as VZr, CuZr, CrZr, SiZr and MgZr, and possible residual alloying elements.

The residual alloying elements may for instance comprise at least one of the elements Sn, Fe, Cr, Ni, Nb, C, O, V, Cu and Sb. The concentration of the residual alloying elements may be less than 5 molar percent. The residual alloying elements may be incorporated from the zirconium based alloy of the tubular base layer.

The coating layer 21 may comprise an outwardly decreasing concentration of the residual alloying elements from the outer border 20a of the tubular base layer 20 towards an outer surface of the coating layer 21.

The zirconium based alloy of the tubular base layer 20 may comprise an inwardly decreasing concentration of the further element from the outer border 20a of the tubular base layer 20 towards an inner surface 20b of the tubular base layer 20.

The coating layer 21 may have a thickness of 10-200 µm, preferably 15-100 µm, or more preferably 20-50 µm. The thickness may be measured from the outer border 20a of the tubular base layer 20 to the outer surface 21a of the coating layer 21. The thickness of the coating layer 21 is thinner, or significantly thinner, than the thickness of the tubular base layer 20. The thickness of the tubular base layer 20 may be 0.8 to 1.0 mm.

Although there may be a gradual transition from the tubular base layer 20 to the coating layer 21, there may still be a distinct border between the two layers 20 and 21, at which the concentration of the residual alloying elements drastically decreases and the concentration of the further element drastically increases. The transition or outer border 20a is thus possible to observe at least during a microscopic investigation of the cladding tube 11.

The amorphous alloy of the coating layer 21 may comprise a dopant comprising at least one of the elements O, N, C, P and S. The dopant or dopants in the form of one or more of these elements may be added in order to aid the stability of the amorphous state of the coating layer 21. The concentration of the dopant in the amorphous alloy may be less than 2000 ppm, preferably less than 1000 ppm or more preferably less than 500 ppm.

The cladding tube 11 may comprise an outer oxide surface layer 22 on the outer surface 21a of the coating layer 21. The outer oxide surface layer may be formed during only use of the cladding tube 11 in the nuclear fission reactor, and thus, no outer oxide surface layer 22 may exist before the cladding tube 11 is introduced into the nuclear fission reactor. The outer oxide surface layer 22 may comprise an oxide of the further element of the amorphous alloy. The outer oxide surface layer 22 may have a maximum thickness that is thinner or significantly thinner than the thickness of the coating layer 21, typically in the order of 1 µm.

The cladding tube 11 may be manufactured by forming a tubular base layer 20 of the zirconium based alloy, for instance one of the zirconium based alloys exemplified above, in a conventional way.

The outer surface (border layer 20a) of the tubular base layer 20 may then be prepared, through cleaning and possibly further processing.

Thereafter, the coating layer 21 of the amorphous alloy may be applied onto the outer surface of the tubular base layer 20 by any suitable method. One suitable method is plasma vapour deposition, PVD, which shall be carried out in the absence of moisture. Another suitable method is electrodeposition.

The outer surface of the tubular base layer 20 can be either chemically treated or mechanically treated before coating to aid the material cohesion.

According to another embodiment, which differs from the embodiments described above only with respect to the composition of the further element of the amorphous alloy, this further element may comprises one of Ti-Cu-Ni-AI, Cu-Ni-Nb and Mg-Ni. These further elements, or combinations of elements, may all form an amorphous alloy, and a bulk metallic glass, suitable as a coating of a cladding tube of a zirconium based alloy.

The present invention is not limited to the embodiments disclosed herein but may be varied and modified within the scope of the following claims.

## Claims

1. A cladding tube (11) for a fuel rod to be used in a nuclear fission reactor, the cladding tube (11) being configured to enclose fissile nuclear fuel (10), the cladding tube (11) comprises a tubular base layer (20) of a zirconium based alloy, and a coating layer (21) applied onto an outer border (20a) of the tubular base layer (20),
**characterized in that**
the coating layer (21) is formed of an amorphous alloy comprising zirconium and a further element.

2. The cladding tube (11) according to claim 1, wherein the further element comprises one of V, Cu, Cr, Si and Mg.

3. The cladding tube (11) according to any one of claims 1 and 2, wherein the amorphous alloy is a binary alloy comprising zirconium and the further element and possible residual alloying elements.

4. The cladding tube (11) according to claim 3, wherein the residual alloying elements comprise at least one of the elements Sn, Fe, Cr, Ni, Nb, C, O, V, Cu and Sb.

5. The cladding tube (11) according to any one of the preceding claims, wherein the coating layer (21) comprises an outwardly decreasing concentration of the residual alloying elements from the outer border (20a) of the tubular base layer (20).

6. The cladding tube (11) according to any one of the preceding claims, wherein the zirconium based alloy of the tubular base layer (20) comprises an inwardly decreasing concentration of the further element from the outer border (20a) of the tubular base layer (20).

7. The cladding tube (11) according to any one of the preceding claims, wherein the amorphous alloy comprises a dopant comprising at least one of the elements O, N, C, P and S.

8. The cladding tube (11) according to claim 7, wherein the concentration of the dopant in the amorphous alloy is less than 5000 ppm.

9. The cladding tube (11) according to any one of the preceding claims, wherein the coating layer (21) has a thickness of 10-200 µm.

10. The cladding tube (11) according to any one of the preceding claims 1 and 2, wherein the cladding tube (11) comprises an outer oxide surface layer (22) on an outer surface of the coating layer (21).

11. The cladding tube (11) according to claim 10, wherein the outer oxide surface layer (22) comprises of an oxide of the further element.

12. A method of manufacturing a cladding tube (11) for a fuel rod to be used in a nuclear fission reactor and for enclosing fissile nuclear fuel,
forming a tubular base layer of the cladding tube of a zirconium based alloy, and
applying a coating layer onto an outer surface of the tubular base layer,
**characterized in that** coating layer (21) is formed of an amorphous alloy comprising zirconium and a further element.

13. The method according to claim 12, comprising the step of: applying the coating layer by plasma vapour deposition.

14. The method according to claim 12, comprising the step of: applying the coating layer by electrodeposition.

15. The method according to any one of claims 12 to 14, wherein an outer oxide surface layer is formed on an outer surface of the coating layer during use of the cladding tube in the nuclear fission reactor.
